# EUROPEAN PATENT SPECIFICATION

(11) **EP 1 379 558 B1**
(45) Date of publication and mention of the grant of the patent: **21.12.2005**
(21) Application number: 02718474.6
(22) Date of filing: 10.04.2002
(51) Int. Cl.: C08C 19/00, C08G 4/00, C05G 1/00

(54) **A UREA-BASED NITROGENOUS FERTILIZER COATED WITH ZEOLITE**
AUF HARNSTOFF BASIERTES MIT ZEOLITH BESCHICHTETES STICKSTOFFDÜNGEMITTEL
FERTILISANT AZOTE A BASE D'UREE ENROBE DE ZEOLITE

(30) Priority: 13.04.2001 IT TO20010363
(43) Date of publication of application: 14.01.2004
(73) Proprietor: Odore, Carlo, 12030 Cavallermaggiore (Cuneo) (IT)
(72) Inventor: MARCHELLO, Giovanni, Battista, I-10011 Aglie' Canavese (Torino) (IT)
(74) Representative: Comoglio, Elena
(86) International application number: PCT/IB2002/001238
(87) International publication number: WO 2002/083740

(56) References cited:
- EP-A- 0 583 160
- GB-A- 2 127 004
- US-A- 5 766 302
- DATABASE WPI Section Ch, Week 199542 Derwent Publications Ltd., London, GB; Class C04, AN 1995-321090 XP002210391 & CN 1 094 020 A (ZUO J), 26 October 1994 (1994-10-26)
- DATABASE WPI Section Ch, Week 199526 Derwent Publications Ltd., London, GB; Class C04, AN 1995-194569 XP002210392 & CN 1 084 501 A (SOIL & FERTILIZER SCI INST BEIJING AGRIC), 30 March 1994 (1994-03-30)

## Description

The present invention relates to a urea-based nitrogenous fertilizer according to claim 1.

Urea (diamide of carbonic acid) is the nitrogenous fertilizer which is used mostly in agriculture since it can supply the greatest quantity of nitrogen at the lowest cost.

Once spread on the soil, it undergoes a hydrolytic process which leads to the formation of carbon dioxide and ammonia; the latter then interacts with other water molecules present in the soil, giving rise to ammonium ions, some of which are used directly by some plants as a nitrogenous nutrient, whereas some are oxidized to nitrite and then nitrate by the nitrifying bacteria that are present in the soil (Nitrosomonas and Nitrobacter, respectively).

Nitrates are the form of nitrogen most easily usable by most plants.

However, they are also easily lost from the soil both owing to the effect of denitrifying bacteria which reduce them to gaseous nitrogen, and owing to the effect of their extreme mobility which takes them, by leaching, below the region probed by the roots.

Nitrogen in ammoniacal form, on the other hand, can be retained by the colloidal fraction of the soil which protects it from leaching and denitrification phenomena.

However, it is known that, because of the chemical fertilization which has now been taking place for decades, together with the meagre applications of organic substances (such as manure and dung), agricultural land is becoming increasingly impoverished with regard to the colloidal fraction and hence to its ability to retain the various nutrients applied, particularly nitrogenous nutrients.

If the soil is fertilized in accordance with normal practice there is therefore a risk of wasting more than 60% of the fertilizer, which leads to economic losses and serious environmental consequences amongst which, for example, is a high nitrate content in the ground water, which renders it unusable by man.

As an alternative, to reduce the loss of nitrogenous nutrients from the soil, it is possible to adopt the strategy of adding the fertilizer in small quantities and on several occasions; however, this solution is disadvantageous from an economic point of view.

In the field of nitrogenous fertilizers, there is therefore a great need to prolong the presence of nitrogenous nutrients in the soil over time, but without incurring excessive costs.

In the prior art, the existence of urea protected by special resin-based coatings, the purpose of which is to reduce urea's capacity for burning by contact and to delay its hydrolysis to ammonia, is known. These resins can thus prolong the presence of urea in the soil, but do not solve the problem of the loss of the nitrates which form by oxidation of the ammonium ions owing to the above-mentioned leaching and reduction phenomena.

This problem has now been solved by the present invention which provides a urea-based nitrogenous fertilizer characterized in that it comprises urea particles and zeolite powder, in which the zeolite powder forms a protective coating layer around the urea particles

Zeolites are known materials. They are hydrated aluminosilicates of alkali metals and alkaline-earth metals belonging to the tectosilicate family. These materials have a characteristic structure with large cavities which communicate with one another and with the exterior by means of channels which contain both cations (in particular Na⁺, K⁺, Ca⁺⁺, Mg⁺⁺) and water molecules. Inside the channels, the cations and the water molecules have considerable freedom of movement which confers on the zeolites quite special characteristics, amongst which is the ability to permit reversible dehydration and the ability to absorb and release cations - including the ammonium ion - by means of the cation exchange mechanism.

The present inventors have found that, with the use of a nitrogenous fertilizer in which the urea particles are coated by a zeolite layer, it is possible not only to delay the hydrolysis of the urea to ammonia but also - by virtue of the cation exchange capacity of the zeolite - to achieve a gradual formation of nitric nitrogen by oxidation of the ammonium ion, over time.

Once the zeolite coating has been opened and the urea hydrolysis process has started, some of the ammonium formed is retained in the zeolite structure by cation exchange with the cations contained therein and is not therefore immediately made available for the nitrifying action of the soil bacteria. The ammonium retained within the zeolite will then be released from the zeolite slowly by cation exchange and will consequently be oxidized gradually to nitrites and nitrates by means of the nitrifying soil bacteria.

The gradual formation of nitrates over time permits, on the one hand, a more gradual and uniform supply of nitrogen to the plants in an easily usable form and, on the other hand, a drastic reduction in the loss of nitrogenous nutrients due to the above-mentioned leaching and reduction mechanisms, since it leads to a reduction in the amount of residual nitrates not immediately used by the plants, in the soil.

This enables a crop production at the same amounts with better quality and with a reduced environmental impact.

Moreover, as will be described in greater detail in Example 4, the fertilizer of the present invention nevertheless enables the crop to be supplied with a quantity of nitrogenous nutrient sufficient to satisfy its immediate needs.

The zeolites used in the fertilizer of the present invention are,preferably natural zeolites. Of the natural zeolites, those which have a lower concentration of sodium ions and a higher concentration of potassium ions are preferred; the sodium ion actually has a toxic effect on plants, inhibiting their growth, whereas the potassium ion is extremely useful for the growth and fruiting of the crop.

The natural zeolites used in the fertilizer of the present invention are therefore preferably selected from the group which consists of Analcime, Chabazite, Laumontite, Phillipsite, Faujasite, Clinoptilolite, Mordenite and mixtures thereof.

More preferably, said natural zeolites have a sodium concentration of between 1.5 and 2.5% by weight and, even more preferably, between 0.5 and 0.8% by weight, and a potassium concentration of between 3.5 and 8.5% by weight, even more preferably between 5.5% and 7% by weight.

The fertilizer of the invention can be produced by granulation of a mixture of zeolite powder and urea particles in the presence of a tackiness agent.

In the present description, the term zeolite is intended to indicate both the zeolite in pure form and the zeolite in the form in which it is present in nature, that is, in the zeolitite form.

Zeolitites are rocks of volcanic origin having a zeolite content variable, on average, between 20 and 90%; the zeolites are distributed homogeneously within them in the form of small crystals mixed with other natural materials such as, for example, clays, feldspars, etc.

The zeolite material used as the starting material for the production of the fertilizer of the present invention is zeolitite.

These materials are available in nature and are easily obtainable in many European and non-European countries, which currently use them in other agricultural and industrial fields.

The zeolitite used as starting material advantageously has a zeolite concentration of between 30 and 90%, more preferably between 50 and 80%. This enables better results to be achieved in terms of the cation exchange capacity of the product.

Zeolitites based on Phillipsite and/or Clinoptilolite are particularly preferred, given the marked selectivity of these natural zeolites for the ammonium ion.

In the fertilizer of the invention, the ratio by weight between zeolitite and urea is preferably between 6:1 and 0.5:1, more preferably between 2.2:1 and 1.2:1.

As a result of experimental tests, it has been established that this ratio is particularly advantageous for the purpose of producing a final product having the capacity to supply to the crop a quantity of nitric nitrogen sufficient to satisfy its immediate needs.

Various substances may be used as tackiness agents for the granulation, amongst which, for example, are carboxymethyl cellulose with a high molecular weight and other polymers, molasses, lignosulphite, etc. An aqueous solution of molasses and lignosulphite is preferred; more preferably, the ratio between molasses and lignosulphite in the solution is between 5:1 and 1:1; even more preferably it is 2:1.

Moreover, the starting materials indicated above may be supplemented with binders, the function of which is to improve the plasticity of the zeolitite during granulation.

For this purpose, it is preferred to use natural clay, preferably bentonites containing calcium or potassium, preferably in a proportion of between 5% and 40% by weight, more preferably between 10% and 30% by weight, relative to the weight of the zeolitite.

Moreover the ratio by weight between the binder and the tackiness agent is preferably between 20:1 and 10:1; more preferably, it is 12:1.

The following examples are provided for illustration purposes and are not intended to limit the scope of the present invention in any way.

### Examples

The zeolitite and the bentonite used in Examples 1-3 for the production of fertilizers according to the invention were in the powder state with a particle size of less than 75µ. In all of the examples, an Eirich R02 granulator with a capacity of 3/51 was used.

### Examples 1

Raw materials:
- zootechnical urea (46% nitrogen; produced by OMV Agrolinz Melamin GmbH, Linz, Austria) having the granulometric curve given in Table 1a;
- zeolitite based on Analcime, Phillipsite and Chabazite (FILLISAN, ATZ, Comiziano, Naples, Italy) having a total zeolite concentration of 65%, a sodium content of 0.8%, and a potassium content of 6.5%;
- binder: calcium bentonite;
- tackiness agent: aqueous solution formed by 20% of 65% molasses, 5% of lignosulphite and 75% of water.

**Table 1a**

| Diameter (mesh) | % |
|---|---|
| >10 | 0.8 |
| 20 | 27.0 |
| 30 | 48.0 |
| 200 | 24.2 |
| <200 | 0 |

The granulator plate was loaded with 800 g of zootechnical urea and 70 cc of the tackiness agent solution indicated above were added over 2 minutes. After working for 1 minute, 1200 g of a mixture formed by 80% of the zeolitite indicated above and 20% of calcium bentonite were added progressively over 3 minutes.

Then, over a period of 2 minutes, 50 g of the tackiness agent solution and a further 800 g of a mixture of 80% zeolitite and 20% calcium bentonite were added. The whole mixture was worked for 4 minutes.
Total working time: 12 minutes
Plate speed: 42 rpm
Mixer speed: 900 rpm

After drying with hot air, a coated product having the granulometric curve given in Table 1b below was obtained.

**Table 1b**

| Diameter (mesh) | % |
|---|---|
| >10 | 36.0 |
| 20 | 58.0 |
| 30 | 4.0 |
| 200 | 1.5 |
| <200 | 0.5 |

### Example 2

Raw materials:
- prilled urea (46% nitrogen expressed as ureic nitrogen; produced by PETROKEMIJA TVORNICA GNOJINA, 44320 Croatia, imported into Italy by SNACI S.p.A., Rastignano di Pianoro, Bologna) having the granulometric curve given in Table 2a;
- zeolitite based on Analcime, Phillipsite and Chabazite, used in Example 1;
- binder: calcium bentonite;
- tackiness agent: aqueous solution formed by 20% of 65%
- molasses, 5% of lignosulphite and 75% of water.

**Table 2a**

| Diameter (mm) | % |
|---|---|
| >2.0 | 0 |
| 1.0 | 75 |
| <1.0 | 25 |

The granulator plate was loaded with 800 g of prilled urea and 110 cc of the tackiness agent solution were added over 1 minute.

The mixture was worked for 2 minutes and then 1200 g of powder constituted by 80% of the zeolitite indicated above and 20% of calcium bentonite were added over a period of 4 minutes.

The whole mixture was worked for a further 2 minutes and then discharged and dried with hot air.
Total working time: 9 minutes
Plate speed: 42 rpm
Mixer speed: 900 rpm.

The granulometric curve of the coated product thus obtained was determined and gave the results given in Table 2b below.

**Table 2b**

| Diameter (mm) | % |
|---|---|
| 2.5 | 0 |
| 2.0 | 28 |
| 1.5 | 67 |
| 1.0 | 4 |
| <1.0 | 1 |

### Example 3

Raw materials:
- prilled urea used in Example 2, having the granulometric curve given in Table 2a;
- zeolitite based on Clinoptilolite (CH ZEOLITE, TMP, South Adrian, Oregon, United States of America) with a total zeolite concentration of 80%, sodium content of 1%, and potassium content of 4.2%;
- binder: calcium bentonite;
- tackiness agent: 23% solution of polyvinyl resin in water (Anisol).

The granulator plate was loaded with 800 g of prilled urea and 70 cc of the tackiness agent solution were added over 2 minutes, then 1400 g of powder constituted by 80% of the zeolitite based on Clinoptilolite and 20% of calcium bentonite were added over a period of 5 minutes.

The whole mixture was worked for 3 minutes and then discharged.
Total working time: 10 minutes
Plate speed: 42 rpm
Mixer speed: 1200 rpm.

The product obtained was dried with hot air and its granulometric curve was then determined (Table 3).

**Table 3**

| Diameter (mm) | % |
|---|---|
| 2.5 | 13 |
| 2.0 | 32 |
| 1.5 | 48 |
| 1.0 | 6 |
| <1.0 | 1 |

### Example 4

Laboratory fertilization tests performed with the products obtained in Examples 1-3 showed that the nitrogen supplied by the zeolite-coated urea persisted for a longer time than that supplied by untreated urea.

The tests were performed by dressing an area of 2 sq. m. of agricultural soil of average blend, 30 cm deep, having a herbaceous crop (Lolium multiflorum) in cultivation, and arranged on a table.

The area was divided into 4 equal sections each of 0.5 sq.m. Each section was dressed with the same quantity of nitrogen units (200 N/ha) but derived from untreated urea or from urea produced in accordance with Examples 1 to 3, respectively.

Each of the sections was also constructed in a manner such that the various leachates could be recovered separately.

The test continued for 90 days. During this period of time, each of the 4 sections was sprinkled with 2 litres of previously-analyzed well water every 8 days and the leachate obtained was collected and analyzed to determine the nitric nitrogen.

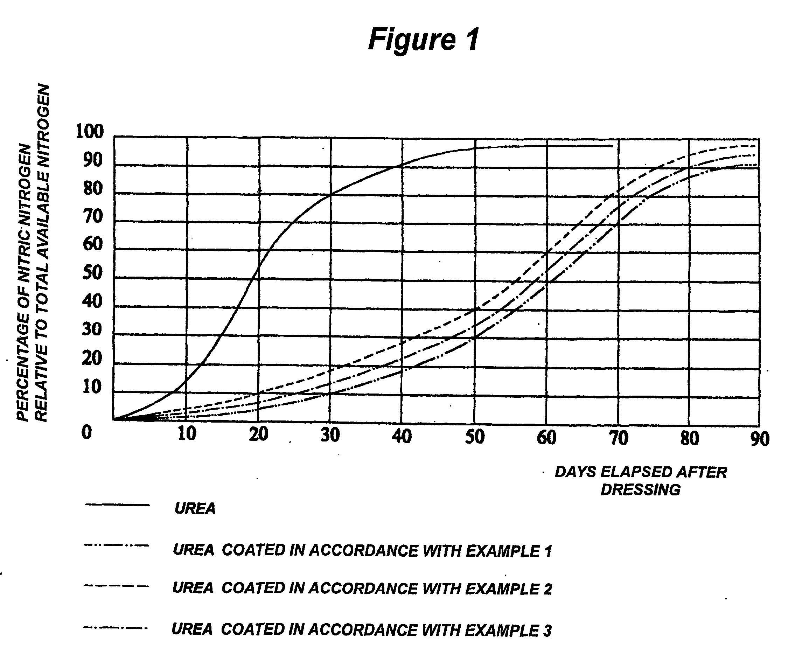

The results obtained are given in the graph of Figure 1, in which the percentage of nitric nitrogen relative to the total nitrogen available is given as a function of the days elapsed after dressing.

These results show clearly that, with the coated urea, the nitric nitrogen is formed much more gradually than with untreated urea, although an appreciable percentage of nitric nitrogen was present in the leachate from the very first days after dressing.

### Example 5

In order to assess the efficacy of the granulation, as well as to determine the granulometric curve which indicates the increase in the diameter of the product obtained as a result of the formation of the protective coating layer around the urea particles, a count of the non-coated granules, which should be less than 5%, was performed on an average sample of about 10g.

Table 4 below gives the results obtained with the products of Examples 1, 2 and 3, respectively.

**Table 4**

| Product | % coated urea | % non-coated urea |
|---|---|---|
| Example 1 | 98.0 | 2.0 |
| Example 2 | 96.7 | 3.3 |
| Example 3 | 95.6 | 4.4 |

The total nitrogen content, which should conform to the ratios existing between the urea and the coating materials used in the granulation, was also determined analytically.

Table 5 below gives the results obtained with the products of Examples 1, 2'and 3, respectively.

**Table 5**

| Product | Total nitrogen concentration (%) |
|---|---|
| Example 1 | 13.1 |
| Example 2 | 18.3 |
| Example 3 | 16.4 |

## Claims

1. Urea-based nitrogenous fertilizer comprising urea particles and zeolite powder, in which the zeolite powder forms a protective coating layer around the urea particles, **characterized in that** the zeolite is in the form of zeolitite having a zeolite content within the range of 30 to 90% by weight and the ratio by weight between zeolitite and urea is within the range of 6:1 to 0.5:1.

2. Fertilizer according to Claim 1, **characterized in that** the zeolite is natural zeolite.

3. Fertilizer according to Claim 2, **characterized in that** the natural zeolite is selected from the group consisting of Analcime, Chabazite, Clinoptilolite, Faujasite, Laumontite, Mordenite, Phillipsite and mixtures thereof.

4. Fertilizer according to any of Claims 1 to 3, **characterized in that** the zeolite has a sodium content within the range of 1.5 to 2.5% by weight and a potassium content within the range of 3.5 to 8.5% by weight.

5. Fertilizer according to any one of Claims 1 to 4, **characterized in that** it is obtainable by granulation of a mixture comprising zeolite powder and urea particles in the presence of a tackiness agent.

6. Fertilizer according to Claim 5, **characterized in that** the tackiness agent is an aqueous solution of molasses and lignosulphite.

7. Fertilizer according to Claim 5 or Claim 6, **characterized in that** the mixture also comprises natural clay as a binder.

8. Fertilizer according to Claim 7, **characterized in that** the natural clay is bentonite containing calcium or potassium.

## Patentansprüche

1. Harnstoff-basierter Stickstoffdünger, umfassend Harnstoffpartikel und Zeolithpulver, wobei das Zeolithpulver eine Schutzschicht um die Harnstoffpartikel bildet, **dadurch gekennzeichnet, dass** der Zeolith in Form von Zeolithit mit einem Zeolithgehalt im Bereich von 30 bis 90 Gewichtsprozent vorliegt und das Gewichtsverhältnis zwischen dem Zeolithit und dem Harnstoff im Bereich zwischen 6:1 und 0,5:1 liegt.

2. Dünger gemäß Anspruch 1, **dadurch gekennzeichnet, dass** der Zeolith natürlicher Zeolith ist.

3. Dünger gemäß Anspruch 2, **dadurch gekennzeichnet, dass** der natürliche Zeolith aus der Gruppe bestehend aus Analcim, Chabasit, Klinoptilotith, Faujasit, Laumontit, Mordenit, Phillipsit und Mischungen hiervon ausgewählt ist.

4. Dünger gemäß einem der Ansprüche 1 bis 3, **dadurch gekennzeichnet, dass** der Zeolith einen Natriumgehalt im Bereich von 1,5 bis 2, 5 Gewichtsprozent und einen Kaliumgehalt im Bereich von 3,5 bis 8,5 Gewichtsprozent aufweist.

5. Dünger gemäß einem der Ansprüche 1 bis 4, **dadurch gekennzeichnet, dass** dieser durch die Granulierung einer Mischung, bestehend aus Zeolithpulver und Harnstoffpartikeln, in Anwesenheit eines Klebrigkeitsmittels gewonnen werden kann.

6. Dünger gemäß Anspruch 5, **dadurch gekennzeichnet, dass** das Klebrigkeitsmittel eine wässrige Lösung von Melasse und Lignosulfit ist.

7. Dünger gemäß Anspruch 5 oder Anspruch 6, **dadurch gekennzeichnet, dass** die Mischung auch natürlichen Lehm als Bindemittel enthält.

8. Dünger gemäß Anspruch 7, **dadurch gekennzeichnet, dass** der natürliche Lehm Bentonit ist, der Kalzium oder Kalium enthält.

## Revendications

1. Engrais azoté à base d'urée comprenant des particules d'urée et de la poudre de zéolite, dans lequel la poudre de zéolite forme une couche d'enrobage protecteur autour des particules d'urée, **caractérisé en ce que** la zéolite est sous la forme d'une zéolitite ayant une teneur en zéolite située dans la plage allant de 30 à 90 % en poids et le rapport en poids entre la zéolitite et l'urée est situé dans la plage allant de 6/1 à 0,5/1.

2. Engrais selon la revendication 1, **caractérisé en ce que** la zéolite est une zéolite naturelle.

3. Engrais selon la revendication 2, **caractérisé en ce que** la zéolite naturelle est choisie dans le groupe constitué par les Analcime, Chabasite, Clinoptilolite, Faujasite, Laumonite, Mordénite, Phillipsite et leurs mélanges.

4. Engrais selon l'une quelconque des revendications 1 à 3, **caractérisé en ce que** la zéolite a une teneur en sodium située dans la plage allant de 1,5 à 2,5 % en poids et une teneur en potassium située dans la plage allant de 3,5 à 8,5 % en poids.

5. Engrais selon l'une quelconque des revendications 1 à 4, **caractérisé en ce qu'**on peut l'obtenir par granulation d'un mélange comprenant de la poudre de zéolite et des particules d'urée en présence d'un agent adhésif.

6. Engrais selon la revendication 5, **caractérisé en ce que** l'agent adhésif est une solution aqueuse de molasses et de lignosulfite.

7. Engrais selon la revendication 5 ou la revendication 6, **caractérisé en ce que** le mélange comprend aussi une argile naturelle servant de liant.

8. Engrais selon la revendication 7, **caractérisé en ce que** l'argile naturelle est une bentonite contenant du calcium ou du potassium.
